(19) Europäisches Patentamt

European Patent Office

Office européen des brevets

(11) **EP 3 690 480 A1**

(12) **EUROPEAN PATENT APPLICATION**

(43) Date of publication:
05.08.2020 Bulletin 2020/32

(51) Int Cl.:
$G01S\ 13/76$ [(2006.01)]      $G01S\ 13/30$ [(2006.01)]
$G01S\ 13/16$ [(2006.01)]      $G01S\ 7/285$ [(2006.01)]
$H04W\ 56/00$ [(2009.01)]      $G01S\ 13/10$ [(2006.01)]

(21) Application number: 19154502.9

(22) Date of filing: 30.01.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Silicon Austria Labs GmbH**
**8010 Graz (AT)**

• **Johannes Kepler Universität**
**4040 Linz (AT)**

(72) Inventor: **Bernhard, Hans-Peter**
**4300 St. Valentin (AT)**

(74) Representative: **Epping - Hermann - Fischer**
**Patentanwaltsgesellschaft mbH**
**Schloßschmidstraße 5**
**80639 München (DE)**

(54) **METHOD FOR TIME OF FLIGHT MEASUREMENT OF PULSES**

(57) The invention pertains to a method for time of flight measurement of pulses (1) within a pulse packet, wherein the pulse packet is transmitted between components of a transmission system. The pulses (1) are periodically sent with a predetermined pulse rate ($c_b$), wherein a time of flight signal of a sent pulse (1) is captured and sampled with a predetermined sampling rate ($c_l$). The sampling rate ($c_l$) and the pulse rate ($c_b$) are related to each other via a fraction of a prime number ($N$).

Fig. 1

**Description**

The invention pertains to a method for time of flight measurement of pulses as well as to a transmission system for sending pulses.

Time of flight measurements, e.g. obtained in a two-way message exchange, are the basic building block for precise delay-compensated synchronization, time-based ranging and localization, or security applications such as distance bounding protocols. Moreover, time of flight measurements are e.g. used for RFID-tag identification or for ranging in radar applications.

In conventional systems, in which the sampling frequency of sampled time of flight signals of transmitted pulses is chosen as a multiple to the symbol rate, bit rate or pulse rate of the transmitted pulses, the so called quantization mean square error (MSE) of the measured time of flight signal from a single measurement is bound by the sampling period T with an expectancy value of T^2/12, if the jitter in the transmitted pulses and, therefore, jitter in the measured time of flight signals is sufficiently small. Based on standard estimation theory, by repeating the time of flight measurements m times at m random instants of time, the MSE can be reduced by 1/m. However, if there is no strict random sampling, this reduction does not hold, which is usually the case if the sampling rate is an integer multiple of the pulse rate. Therefore, the standard methods can only be substantially improved by increasing the sampling rate (decreasing the sampling period).

It is an object of the present invention to provide a method and a transmission system for time of flight measurement of pulses which enable an improved estimation of the time of flight of transmitted pulses over conventional approaches.

According to a first aspect, this object is solved by a method according to claim 1. Further implementations are disclosed in the dependent claims.

The method provides a time of flight measurement of pulses within a pulse packet. The pulse packet is transmitted between components of a transmission system. The pulses are periodically sent with a predetermined pulse rate. A time of flight signal of a sent pulse is captured and sampled with a predetermined sampling rate. The sampling rate and the pulse rate are related to each other via a fraction of a prime number.

This method provides a sampling scheme significantly different to sampling schemes according to conventional approaches. The proposed method allows a reduction of the MSE of estimated time of flight signals of sent pulses with $1/m^2$ for $m$ sent pulses. The method bases on the sampling rate (sampling frequency) to be chosen with a fractional prime relation to the pulse rate (bit rate). Hence, the proposed method allows for a substantial reduction of the MSE compared to conventional approaches without the need to increase the sampling rate. Additionally, a tight upper bound of the MSE independent of values of the time of flight signals can be derived, which is not possible with conventional systems or approaches.

The relation of the sampling rate and the pulse rate to each other via a fraction of a prime number means in this context that the sampling rate is the pulse rate multiplied by a fraction of a prime number. The following expression shall illustrate this relation, wherein $c_l$ describes the sampling rate, $c_b$ describes the pulse rate, $N$ describes a prime number, and $m$ describes a positive integer:

$$c_l = c_b \cdot N/m.$$

As long as $N > m$ and $m \neq 1$, the sampling rate and the pulse rate are related to each other via a fraction of a prime number, resulting in that the sampling rate is not an integer multiple of the pulse rate. Thus a specific deviation or a specific disintegration of sampling points and pulses or sampling rate and pulse rate during a time of flight measurement can be generated, resulting in the above explained advantages.

In the proposed method, the time of flight measurement between components of the transmission system may be easily performed by evaluating one or more pulse packets which are transmitted between components of the transmission system. Hence, the method can be easily implemented/integrated in packet based transmission systems in which pulses are transmitted within pulse packets between the components. Thus, the method describes an advantageous or optimum sampling scheme for packet assisted time of flight measurements.

The proposed method may be applied in any packet based transmission system, in particular in digital communication systems. The proposed method may support multi-node ranging algorithms focusing on (packet-based) time of flight or, in particular, round trip time (RTT) methods, possibly in combination with ranging. Thus, it is possible to avoid lack of scalability resulting from pairwise sequentially ranging. Also in wired network topology the time of flight or RTT plays a major role in synchronizing nodes on a pairwise base. The described method can be even more relevant for underwater environments using an asymmetrical time of flight or RTT to achieve node localization on large-scale. In those applications, energy-efficient and accurate time of flight or RTT estimates without prior time synchronization are demanded. Also, it has to be mentioned that time of flight or RTT measurements in 5G systems may be profiting immediately from the proposed method, because the sampling period can be limited to coarse time steps. In those cases the measurement jitter is very small compared to the sampling time and, therefore, the proposed method may improve the measurement accuracy within packet based transmission systems significantly.

According to various implementations of the method, the pulse rate is lower than the sampling rate. In particular, the sampling rate is at least two times higher than the sampling rate in order to fulfil the sampling theorem of Nyquist-Shannon. This guarantees full signal reconstitution after sampling.

According to various implementations of the method, a predetermined number of the periodically sent pulses defines the pulse packet with a predetermined pulse packet rate. The sampling rate and the pulse packet rate are related to each other via the prime number. The following expression shall illustrate this relation, wherein $c_l$ describes the sampling rate, $c_p$ describes the pulse packet rate, and $N$ describes the prime number, as explained above:

$$c_l = c_p \cdot N.$$

According to various implementations of the method, the pulse rate is an integer multiple of the pulse packet rate. Taking into consideration the above relations, the pulse rate may for example be the pulse packet rate multiplied by the positive integer $m$, where $m$ sent pulses define a pulse packet, i.e.:

$$c_b = c_p \cdot m.$$

This means that every N-th part of the pulse packet period a sampling point is captured, and every m-th part of the pulse packet period a pulse is sent. With $N$ being a prime number, $N > m$ and $m \neq 1$, the sampling rate and the pulse rate are related to each other via the fractional prime relation $N/m$, resulting in that the sampling rate is not an integer multiple of the pulse rate, as explained above.

According to various implementations of the method, the prime number is selected by multiplying an initially determined measurement time with the sampling rate (or dividing the initially determined measurement time by the sampling period) and choosing a prime number which is next to this result. The pulse packet rate is then determined as the sampling rate divided by the prime number, which means the pulse packet period is determined as the sampling period multiplied with the prime number. This allows for a very easy determination of a prime number in order to yield the above considerations and findings. For example, a division of an initially determined measurement time of **100$\mu$s** by a sampling period of 1ps (multiplication of **100$\mu$s** with **10$^6$** Hz) yields the result **100**. Then, the prime number $N$ may be chosen to **97** as the prime number next to the result of the division. The pulse packet rate is then determined as :

$$c_p = c_l/(97).$$

According to various implementations of the method, the pulses of the pulse packet are periodically sent with the predetermined pulse rate from a transmitter to a receiver of the transmission system. The time of flight signal of a sent pulse received at the receiver is captured at the receiver and sampled at the receiver with the predetermined sampling rate. These implementations allow for a simple configuration for measuring/estimating time of flight signals of pulses within a pulse packet sent from a transmitter to a receiver of the transmission system. The time of flight signals of sent pulses within a pulse packet are captured and sampled at the receiver with the predetermined sampling rate.

In alternative implementations, the pulses of the pulse packet are periodically sent with the predetermined pulse rate from a first transceiver to a second transceiver or to a passive signal reflecting entity (e.g. an RFID tag, etc.) of the transmission system, wherein the second transceiver or the passive signal reflecting entity re-sends the received pulse to the first transceiver. The time of flight or, in this case, RTT signal of a sent pulse is then captured at the first transceiver and sampled at the first transceiver with the predetermined sampling rate. As explained above, also in these implementations, the sampling rate and the pulse rate are related to each other via a prime number or a fraction of a prime number, resulting in the above-explained advantages.

According to various implementations of the method with a transmitter sending pulses and a receiver capturing and sampling the received pulses, the time of flight signal of a sent pulse is captured at the receiver by means of a counter. The counter is incremented, when a pulse is sent by the transmitter and the counter is decremented, when a sent pulse is detected at the receiver. The counter outputs a count signal which changes, when the counter is incremented or decremented respectively. The output signal of the counter reflects the time of flight signal of a sent pulse. These implementations allow for a simple configuration of an estimator for measuring/estimating time of flight signals of pulses sent from a transmitter to a receiver of a transmission system. The counter is advantageous, if the time of flight is longer than the pulse period. In such a case, a next pulse is sent by the transmitter before the foregoing pulse is received at the receiver. Hence, the counter can be incremented twice (one time by the foregoing pulse and one time by the next pulse), before the counter is decremented once (by the received foregoing pulse). Hence, the counter may manage counting of the sent and received pulses and, therefore, capturing of time of flight signals independent from and uninterrupted by the pulse period. The latter may be flexibly chosen independent from the time of flight of the pulses. Alternatively, to a counter, a bi-stable flip-flop may be provided. The flip-flop may be set by a sent pulse and reset by a received pulse. However, when using a flip-flop instead of a more complex counter, as explained above, the requirement of the time of flight being shorter than the pulse period must be met.

According to various implementations of the method, an estimated time of flight signal of one single pulse is determined by calculating an average value from the sampled time of flight signals of a predetermined number of sent pulses. This allows a very easy estimation of the time of flight of a single pulse by providing averaging of sampled time of flight signals of a predetermined number of sent pulses. For example, by calculating the average of m sent pulses and providing the fractional prime relation between the sampling rate and the pulse rate, the MSE of the estimated time of flight, as explained above, can be reduced by an upper bound of $1/m^2$.

According to a second aspect, the object is solved by a transmission system according to claim 9. Further implementations or embodiments are disclosed in the dependent claims.

The transmission system is configured to periodically send pulses with a predetermined pulse rate within a pulse packet between components of the transmission system. The transmission system is further configured to capture a time of flight signal of a sent pulse and to sample the captured time of flight signal with a predetermined sampling rate. The sampling rate and the pulse rate are related to each other via a fraction of a prime number.

According to various embodiments of the transmission system, a predetermined number of the periodically sent pulses is defined as a pulse packet with a predetermined pulse packet rate. The sampling rate and the pulse packet rate are related to each other via the prime number.

According to various embodiments, the transmission system comprises a transmitter and a receiver. The receiver is configured to capture the time of flight signal of a sent pulse received at the receiver and to sample the time of flight signal with the predetermined sampling rate.

According to various embodiments of the transmission system with a transmitter and a receiver, the transmission system further comprises a counter. The receiver is configured to capture the time of flight signal of a sent pulse by means of the counter. The counter is configured to be incremented, when a pulse is sent by the transmitter and to be decremented, when a sent pulse is detected at the receiver. The counter is further configured to output a count signal which changes, when the counter is incremented or decremented respectively, the outputted count signal reflecting the time of flight signal of the sent pulse.

According to various embodiments, the transmission system is further configured to determine an estimated time of flight signal of one single pulse by calculating an average value from the sampled time of flight signals of a predetermined number of sent pulses.

The transmission system can be configured to perform a method as explained above in the context of the first aspect.

The transmission system according to the second aspect may achieve the advantages, as explained above in the context of the method according to the first aspect to which reference is made here.

The implementations, method steps, advantageous aspects and features of the method according to the first aspect can find expression in analogue embodiments, structural implementations, advantageous aspects and features of the transmission system according to the second aspect and vice versa.

In the following, the invention is further described with respect to an exemplary implementation with the aid of drawings.

Figure 1 shows a schematic diagram of an exemplary embodiment of an estimator for measuring the time of flight of pulses,

Figure 2 shows characteristic curves of simulation results.

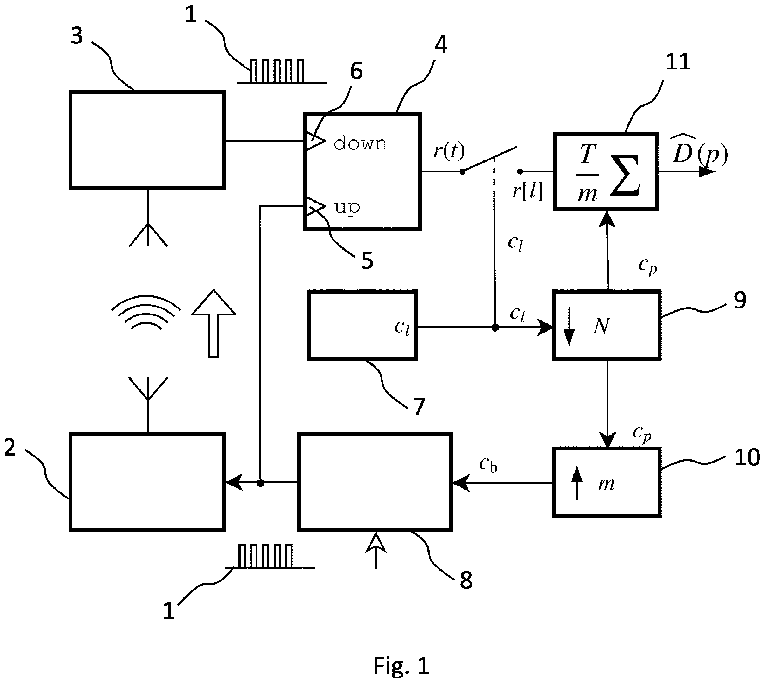

Figure 1 shows a schematic diagram of an exemplary embodiment of an estimator for measuring the time of flight of pulses within a pulse packet. The estimator is for example part of a transmission system, comprising a transmitter 2 and a receiver 3. The transmission system may be any field device configured for transmitting pulses 1. For example, the transmission system may be a digital communication system. Alternatively, the transmission system may for example be (part of) a test assembly for estimating time of flight measurements of pulses 1.

Pulses 1 can be sent from the transmitter 2 to the receiver 3. In particular, the transmitter 2 is configured to periodically send pulses 1 with a pulse rate $c_b$ in form of pulse packets to the receiver 3. For transmission of the pulses 1, a transmission logic 8 is provided which processes incoming data packets into the pulses 1/pulse packets to be sent by the transmitter 2. The transmission logic 8 can be implemented in software and/or hardware. The pulses 1 are grouped in a pulse packet of length $m$, which means that $m$ pulses 1 per packet are repeatedly and periodically sent at a specific pulse packet rate $c_p = \frac{1}{m} c_b$.

In standard digital communication systems each pulse 1 in the packet represents one bit or symbol. The here explained implementation can be applied, when the receiver 3 is able to detect the reception of each single symbol/pulse 1 in the packet. In Figure 1, this periodic time of flight measurement is depicted. It shows a system which sends out pulse packets with a length of $m$ pulses/bits 1. Each of these pulses 1 has to be separately detectable with identifiable edges at each pulse. To be more general, the m individual pulses do not have to be necessarily information bits. Any marker or other transmit pulse can be used if the time of flight is not mutually influenced.

When the pulses 1 are sent out by the transmitter 2, a counter 4 is incremented, triggered by the rising edge of each sent pulse 1 at an input 5 for counting up. In the exemplary embodiment of Figure 1, the pulses 1 are sent through a wireless connection from the transmitter 2 to the receiver 3. The pulses 1 require a certain time to be transmitted from transmitter 2 to receiver 3, which is regarded as the time of flight of the pulses 1.

Subsequently, the individual pulses 1 are received at the receiver 3 after the time of flight between transmitter 2 and receiver 3. When the pulses 1 are received by the receiver 3, the counter 4 is decremented, triggered by the rising edge of each received pulse 1 at an input 6 for counting down.

Transmitter 2, receiver 3 and counter 4 are implemented in the time continuous domain. Therefore, sampling has to be performed at an output of the counter, providing a count signal $r(t)$. The sampling of the continuous-time measurement signal $r(t)$ is performed at $t = lT$ with the sampling rate $c_l = 1/T$ and $l \in \mathbb{N}$. The sampling rate $c_l$ is provided by a clock 7. In this way, the continuous-time measurement signal $r(t)$ is sampled to $r[l] = r(lT)$.

Further, $c_l > c_b$ is considered. As explained above, the $m$ pulses per packet are sent at a rate $c_b = m \cdot c_p$ (see explanations above), which is lower than the sampling rate $c_l$. Moreover, $c_l$ and $c_b$ are coupled by a fractional prime relation. To achieve this prime relation, the clock or sampling rate $c_l$ is reduced by a prime number $N$ to the packet rate $c_p$, i.e. $c_l = N \cdot c_p$ or $c_p = \frac{1}{N} \cdot c_l$. This may be achieved in the embodiment according to Figure 1 by a down sampler 9, which samples the sampling rate $c_l$ down to the packet rate $c_p$. This down sampling may be achieved for example by counting down $N$ times and then the packet rate signal $c_p$ is resulting.

In order to generate the pulse rate $c_b$, the intermediate clock (pulse packet rate) $c_p$ is interpolated by the integer factor $m$, which is the number of pulses and, hence, the length of the packet, as explained above. The interpolation of the intermediate clock $c_p$ may be achieved in the embodiment according to Figure 1 by an up sampler 10, which samples the intermediate clock $c_p$ up to the pulse rate $c_b = m \cdot c_p$.

Usually $m$ is a power of two, originated by period doubling. However, m may also adopt other positive integer values. Hence, $c_l$ and $c_b$ are coupled by the fractional prime relation $c_l = c_b \cdot N/m$. With $N$ being a prime number, $N > m$ and $m \neq 1$ results in that the sampling rate is not an integer multiple of the pulse rate. Thus a specific deviation or a specific disintegration of sampling points and pulses or sampling rate $c_l$ and pulse rate $c_b$ during a time of flight measurement can be generated.

The prime number $N$ can be selected by multiplying an initially determined measurement time with the sampling rate $c_l$ and choosing a prime number $N$ which is next to this result. For example, a multiplication of an initially determined measurement time of $100\mu s$ with a sampling rate $c_l$ of $10^6$Hz yields the result **100**. Then, the prime number $N$ may be chosen to $N = 97$ as the prime number next to the result of the multiplication.

The values of the sampled signal $r[l]$ according to Figure 1 are summed up in an estimation logic 11 which can be implemented in software and/or hardware. The estimation logic 11 calculates the duration of all time of flight signals of all received pulses (detected/captured via counter 4 as explained above) within one measurement period, e.g. one pulse packet period with $N$ times the sampling period by summing up and multiplying the result with $\frac{T}{m}$ (see Figure 1). The summation is reset/restarted after $N$ sampling periods, i.e. after each received pulse packet with pulse packet rate $c_p$, which is triggered by the down sampler 9 in the embodiment of Figure 1. In this way, with the rate $c_p$ estimates $\hat{D}(p)$ of the average time of flight of one pulse are calculated, where p is the packet counter.

In this way, considering the fractional prime relation between sampling rate $c_l$ and pulse rate $c_p$ as explained above, estimates D(p) of the average time of flight of one pulse can be calculated with an upper bound of the MSE of $1/m^2$, with $m$ being the number of pulses sent in one pulse packet. In this way, the more pulses are sent and processed according to the above implementations, the lower is the MSE, following an upper bound of $1/m^2$. This finding is further explained in the following.

The sampled signal $r[l]$ is modeled by additive noise $r[l] = x[l] + n[l]$, where $n[l]$ is assumed to be white gaussian noise with variance $\sigma_n$. In the following we use the summation in the estimation logic 11 of Figure 1 with $T/m = P/N$ for the estimation of

$$\widehat{D} = \frac{P}{N} \sum_{l=0}^{N-1} r[l] = \frac{P}{N} \sum_{l=0}^{N-1} x[l] + \frac{P}{N} \sum_{l=0}^{N-1} n[l].$$

Instead of the sum over $x[l]$ we use the DC component resulting from a Fourier transform $X[k]$ with $k = 0$ for the DC component $X[0]$ to describe the sum over $x[l]$ in the previous equation and we write

$$\widehat{D} = \frac{P}{N} X[0] + \frac{P}{N} \sum_{l=0}^{N-1} n[l].$$

The estimation is corrupted by jitter and aliasing. Therefore, the mean square error (MSE) of the RTT estimator is derived as expectation of

$$\overline{e^2} = E\left\{\left|D - \frac{P}{N} X[0]\right|^2\right\} + E\left\{\left|\frac{P}{N} \sum_{l=0}^{N-1} n[l]\right|^2\right\} = \overline{e_D^2} + \overline{e_n^2}.$$

Hence, $\overline{e^2}$ is given as sum of the expectation of the squared error of the noise $\overline{e_n^2}$ and the squared estimation error of the difference of $D$ to the Fourier transform at frequency 0 , $\overline{e_D^2}$. Because $n[l]$ is assumed to be not correlated with $x[l]$. Finally, the MSE expressed by the Fourier transform results in

$$\overline{e_D^2} = \frac{P^2}{N^2} \sum_{k=-\infty \backslash 0}^{\infty} \sin^2\left(\frac{\pi k D}{P}\right) \frac{\sin^2\left(\frac{\pi k N T}{P}\right)}{(\pi k)^2 \sin^2\left(\frac{\pi k T}{P}\right)}$$

With $= NT/P$, $\overline{e_D^2}$ yields

$$\overline{e_D^2} = \frac{P^2}{N^2} \sum_{k=-\infty \backslash 0}^{\infty} \sin^2\left(\frac{\pi k D}{P}\right) \frac{\sin^2(\pi m k)}{(\pi k)^2 \sin^2\left(\frac{\pi k m}{N}\right)}$$

where the numerator $\sin^2(\pi mk)$ is zero for all $k$. Obviously, this holds for all terms of the sum, if the denominator is not zero, hence $N$ has to be an infinite prime number. Obviously, $N$ is a finite number, still infinite contributions at multiples of $k = iN$ exist, where a fraction of terms in the previous equation result in a division zero by zero. By the use of de L'Hospital it can be rewritten as

$$\overline{e_D^2} = \frac{P^2}{N^2} \sum_{k=-\infty \backslash 0}^{\infty} \sin^2\left(\frac{im\pi D}{T}\right) \frac{2T^2}{(im\pi)^2}$$

Because $|\sin()|$ is always less than one, an upper bound for $\overline{e_D^2}$ is given with $|\sin()| = 1$ which implies that the argument of $\sin()$ is $\pi\frac{D}{T}im = \frac{\pi}{2} + v\pi = \pi\frac{1}{2}(1 + 2v).$ It holds if $\frac{D}{T} = \frac{1}{2}$ and $i$ is an odd number.

Finally, we derive an upper bound by evaluating the sum which leads to

$$\overline{e_D^2} \leq \frac{T^2}{4m^2}.$$

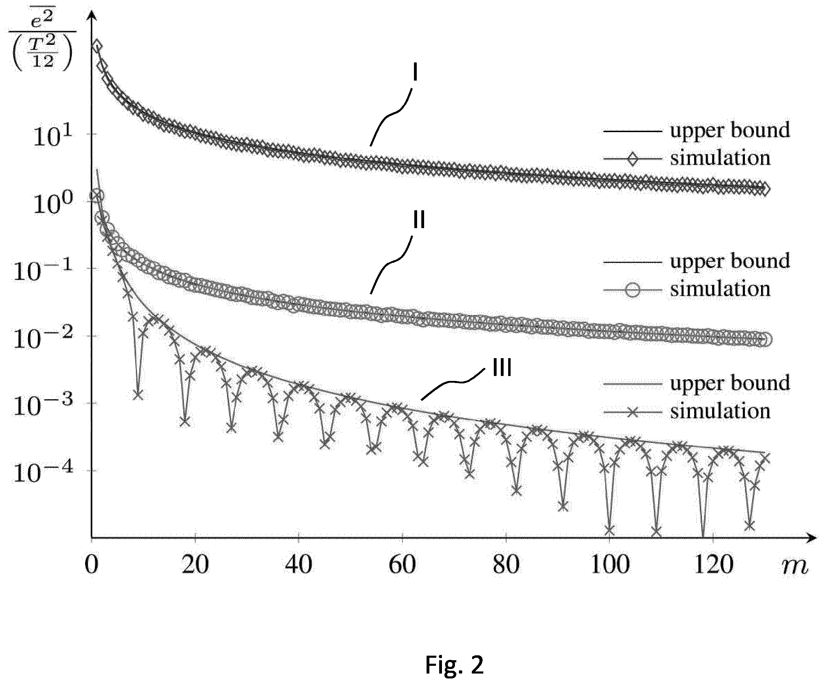

Figure 2 shows characteristic curves of simulation results. In particular, Figure 2 shows Monte Carlo simulations of different time of flight estimators which were used to compare conventional time of flight measurement approaches with the here explained approach. Figure 2 shows on the vertical ordinate axis the MSE standardized by the expectancy value of $T^2/12$, hence in Figure 2 the standardized MSE is $\frac{\overline{e^2}}{\left(\frac{T^2}{12}\right)}$. Further, Figure 2 shows on the horizontal abscissa axis the number $m$ of the $m$ pulses within a pulse packet.

The simulation setups covered two different jitter/noise levels of the transmission system, disturbing the transmission of the pulses between the transmitter 2 and the receiver 3, as explained above in the context of Figure 1. The conventional measurement setup (conventional estimator) was performed 5000 times with random phase. Each setup (the conventional measurement setup/estimator as well as the measurement setup/estimator according to the herein described approach) were performed with the time of flight kept constant at D = 7,11011056786 **T.**

The characteristic curves I to III in Figure 2 each illustrate an upper bound of the standardized MSE (in solid lines) as well as simulation values (as "dotted" value spots).

In the upper scenario I according to Figure 2, the signal power of the jitter is ten times the quantization error. In this case the conventional approach as well as the herein described approach both perform similar. The jitter is dominating the resulting MSE, which only decays with $^1/_m$ in both measurement setups.

In the middle scenario II as well as in the lower scenario III according to Figure 2 both the conventional measurement setup/estimator as well as the measurement setup/estimator according to the herein described approach are used in a simulation where the jitter is very low compared to the quantization error.

The middle scenario II according to Figure 2 illustrates the simulation results of the conventional measurement/estimator. In this scenario the standardized MSE only decays along the error bound with $^1/_m$.

However, in the lower scenario III according to Figure 2, illustrating the simulation results of the measurement setup/estimator according to the herein described approach, the standardized MSE decays following the upper error bound of $1/m^2$. The simulated results are sometimes even better (MSE below the upper bound, local minima as reflected in the "dotted" values). This is because some values of $m$ are optimal to estimate individual values of the time of flight. Hence, the difference between the conventional measurement/estimator and the measurement setup/estimator according to the herein described approach are remarkable.

In this disclosure a method as well as a transmission system are described, following a sampling scheme, in particular for packet based transmission/communication systems, to significantly increase the measurement accuracy of time of flight measurements in quantized systems. Most notably, for $m$ repeated measurements in low jitter conditions, the proposed scheme has a scaling behaviour of the MSE of $1/m^2$ instead of $^1/_m$ as in conventional systems/approaches. Thereby, conventional systems in which the sampling rate and the pulse rate have an integer relation, require a pulse transmission with random phase in order to achieve its best scaling behaviour of $^1/_m$. The here proposed method and system, in which the sampling rate is chosen as fractional prime relation to the pulse rate, always outperforms conventional systems and additionally supports periodic pulse transmission as used in packet-based communication systems. Hence, the described method and transmission system are well suited to be incorporated in and to improve many existing time of flight measurement systems/applications.

List of reference symbols

| | |
|---|---|
| 1 | pulses |
| 2 | transmitter |
| 3 | receiver |
| 4 | counter |
| 5 | counter input |
| 6 | counter input |
| 7 | clock |
| 8 | transmission logic |
| 9 | Down sampler |
| 10 | Up sampler |

| 11 | estimation logic |
| $c_l$ | sampling rate |
| $c_b$ | pulse rate |
| $c_p$ | pulse packet rate |
| $N$ | prime number |
| $m$ | number of pulses |
| $r(t)$ | count signal/time of flight signal |
| $r[l]$ | sampled count signal/time of flight signal |
| $\hat{D}(p)$ | estimated time of flight per packet |
| $\overline{e^2}$ | MSE |
| I, II, III | characteristic simulation curves |

**Claims**

1. Method for time of flight measurement of pulses (1) within a pulse packet, wherein the pulse packet is transmitted between components of a transmission system, wherein the pulses (1) are periodically sent with a predetermined pulse rate $(c_b)$, wherein a time of flight signal of a sent pulse (1) is captured and sampled with a predetermined sampling rate $(c_l)$, and
wherein the sampling rate $(c_l)$ and the pulse rate $(c_b)$ are related to each other via a fraction of a prime number $(N)$.

2. Method according to claim 1, wherein the pulse rate $(c_b)$ is lower than the sampling rate $(c_l)$.

3. Method according to claim 1 or 2, wherein a predetermined number $(m)$ of the periodically sent pulses (1) defines the pulse packet with a predetermined pulse packet rate $(c_p)$,
wherein the sampling rate $(c_l)$ and the pulse packet rate $(c_p)$ are related to each other via the prime number $(N)$.

4. Method according to claim 3, wherein the pulse rate $(c_b)$ is an integer multiple of the pulse packet rate $(c_p)$.

5. Method according to claim 3 or 4, wherein the prime number $(N)$ is selected by multiplying an initially determined measurement time with the sampling rate $(c_l)$ and choosing a prime number $(N)$ which is next to the result of the multiplication of the initially determined measurement time with the sampling rate $(c_l)$, and wherein the pulse packet rate $(c_p)$ is determined as the sampling rate $(c_l)$ divided by the prime number $(N)$.

6. Method according to one of claims 1 to 5, wherein the pulses (1) of the pulse packet are periodically sent with the predetermined pulse rate $(c_b)$ from a transmitter (2) to a receiver (3) of the transmission system,
wherein the time of flight signal of a sent pulse (1) received at the receiver (3) is captured at the receiver (3) and sampled at the receiver (3) with the predetermined sampling rate $(c_l)$.

7. Method according to claim 6, wherein the time of flight signal of a sent pulse (1) is captured at the receiver (3) by means of a counter (4), wherein the counter (4) is incremented, when a pulse (1) is sent by the transmitter (2) and the counter (4) is decremented, when a sent pulse (1) is detected at the receiver (3), wherein the counter (4) outputs a count signal $(r(t))$ which changes, when the counter (4) is incremented or decremented respectively, and wherein the outputted count signal $(r(t))$ reflects the time of flight signal of the sent pulse (1).

8. Method according to one of claims 1 to 7, wherein an estimated time of flight signal $(\hat{D}(p))$ of one single pulse is determined by calculating an average value from the sampled time of flight signals $(r[l])$ of a predetermined number $(m)$ of sent pulses (1) .

9. Transmission system, configured to periodically send pulses (1) with a predetermined pulse rate $(c_b)$ within a pulse packet between components of the transmission system, the transmission system being further configured to capture a time of flight signal of a sent pulse (1) and to sample the captured time of flight signal with a predetermined sampling rate $(c_l)$, wherein the sampling rate $(c_l)$ and the pulse rate $(c_b)$ are related to each other via a fraction of a prime number $(N)$.

10. Transmission system according to claim 9, wherein a predetermined number $(m)$ of the periodically sent pulses (1) is defined as the pulse packet with a predetermined pulse packet rate $(c_p)$,

wherein the sampling rate $(c_l)$ and the pulse packet rate $(c_p)$ are related to each other via the prime number $(N)$.

11. Transmission system according to claim 9 or 10, comprising a transmitter (2) and a receiver (3), wherein the receiver (3) is configured to capture the time of flight signal of a sent pulse (1) received at the receiver (3) and to sample the time of flight signal with the predetermined sampling rate $(c_l)$.

12. Transmission system according to claim 11, further comprising a counter (4), wherein the receiver (3) is configured to capture the time of flight signal of a sent pulse (1) by means of the counter (4), and wherein the counter (4) is configured to be incremented, when a pulse (1) is sent by the transmitter (2) and to be decremented, when a sent pulse (1) is detected at the receiver (3), wherein the counter (4) is further configured to output a count signal $(r(t))$ which changes, when the counter (4) is incremented or decremented respectively, the outputted count signal $(r(t))$ reflecting the time of flight signal of the sent pulse (1).

13. Transmission system according to one of claims 9 to 12, further configured to determine an estimated time of flight signal $(\hat{D}(p))$ of one single pulse by calculating an average value from the sampled time of flight signals $(r[l])$ of a predetermined number $(m)$ of sent pulses (1).

14. Transmission system according to one of claims 9 to 13, which is configured to perform a method according to one of claims 1 to 8.

15. Software program product, which is executable by one or more microprocessors and which during execution in the one or more microprocessors performs a method according to one of claims 1 to 8.

Fig. 1

EP 3 690 480 A1

Fig. 2

Europäisches
Patentamt

European
Patent Office

Office européen
des brevets

# EUROPEAN SEARCH REPORT

Application Number

EP 19 15 4502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2008/024355 A1 (SUN XIAOBING [SG] ET AL) 31 January 2008 (2008-01-31)<br>* paragraph [0040] - paragraph [0044] *<br>* figures 1-3 *<br>----- | 1-4,6-15<br>5 | INV.<br>G01S13/76<br>G01S13/30<br>G01S13/16<br>G01S7/285 |
| X | DE 10 2012 106149 A1 (ENDRESS & HAUSER GMBH & CO KG [DE])<br>9 January 2014 (2014-01-09)<br>* paragraph [0018] - paragraph [0019] *<br>* paragraph [0027] - paragraph [0032] *<br>* paragraph [0049] - paragraph [0055] *<br>* figures 3, 4 *<br>----- | 1-15 | H04W56/00<br>G01S13/10 |

TECHNICAL FIELDS
SEARCHED (IPC)

G01S
H04W

The present search report has been drawn up for all claims

| Place of search | Date of completion of the search | Examiner |
|---|---|---|
| Munich | 17 July 2019 | Köppe, Maro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 4502

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2019

| Patent document cited in search report | Publication date | Patent family member(s) | | Publication date |
|---|---|---|---|---|
| US 2008024355 A1 | 31-01-2008 | JP | 2007327956 A | 20-12-2007 |
| | | SG | 137726 A1 | 28-12-2007 |
| | | US | 2008024355 A1 | 31-01-2008 |
| DE 102012106149 A1 | 09-01-2014 | CN | 104471358 A | 25-03-2015 |
| | | DE | 102012106149 A1 | 09-01-2014 |
| | | EP | 2870438 A1 | 13-05-2015 |
| | | WO | 2014009068 A1 | 16-01-2014 |

EPO FORM P0459

For more details about this annex : see Official Journal of the European Patent Office, No. 12/82